# EUROPÄISCHE PATENTSCHRIFT

(11) **EP 1 457 262 B1**
(45) Veröffentlichungstag und Bekanntmachung des Hinweises auf die Patenterteilung: **26.05.2010**
(21) Anmeldenummer: 04002990.2
(22) Anmeldetag: 11.02.2004
(51) Int. Cl.: B03B 5/28, B03D 1/00, B01J 38/72, H01M 4/92

(54) **Verfahren zur Abtrennung von hochaktiven Katalysatorpartikeln**
method of separation of highly active catalyst particles
Méthode de séperation de particules catalytiques à haute activité

(30) Priorität: 10.03.2003 DE 10310269
(43) Veröffentlichungstag der Anmeldung: 15.09.2004
(73) Patentinhaber: Forschungszentrum Jülich GmbH, 52425 Jülich (DE)
(72) Erfinder: Dohle, Hendrik, 52224 Stolberg (DE); Bringmann, Jan, 76726 Germersheim (DE)

(56) Entgegenhaltungen:
- WO-A-00/43127
- WO-A-99/32407
- US-A- 2 780 585
- US-A- 2 923 649
- US-A- 5 702 836
- PATENT ABSTRACTS OF JAPAN Bd. 0185, Nr. 40 (E-1616), 14. Oktober 1994 (1994-10-14) & JP 6 196171 A (MATSUSHITA ELECTRIC IND CO LTD), 15. Juli 1994 (1994-07-15)

## Beschreibung

Die Erfindung betrifft ein Verfahren zum Abtrennen von Katalysatorpartikeln, insbesondere ein Verfahren zum Abtrennen von hochaktiven Partikeln von weniger aktiven Partikeln in einer Katalysatormischung.

### Stand der Technik

Handelsübliche Metallkatalysatoren weisen regelmäßig Partikel mit unterschiedlichen Partikelgrößen und unterschiedlicher Aktivität auf. Dabei hängt die Katalysatoraktivität hauptsächlich von zwei Faktoren ab. Zum einen von den pro Oberflächeneinheit verfügbaren katalytisch aktiven Zentren und zum anderen vom Volumen des Katalysatorpartikels (Korn). Mit abnehmender Katalysatorpartikelgröße steigt im Regelfall die Anzahl der aktiven Zentren bezogen auf das Katalysatorvolumen, da das Verhältnis von Oberfläche zu Volumen mit sinkendem Volumen des Katalysatorpartikels zunimmt.

Für den Einsatz von Katalysator als Elektrode in Brennstoffzellen ist ein möglichst effektiver, d. h. ein Katalysator mit möglichst vielen aktiven Zentren pro Volumeneinheit Katalysator wünschenswert.

Aus der Literatur sind schon veschiedene Methoden zur Behandlung feiner Partikel in Flüssiglkeiten bekannt.

So wird in US 2,923,649 ein Verfahren zur Herstellung einer stabilen Suspension von feinen metallischen Partikel mit einer Dichte größer als 2,25 g/cm3 beschrieben. Dabei wird das metallische Pulver zunächst mit einem Material derart beschichtet, dass die Partikel eine größere Adhäsion zu einem Gas als zu einer Flüssigkeit aufweisen. Anschließend werden die Partikel in einer Flüssigkeit dispergiert, die eine Reduktionsmittel enthält. Die Flüssigkeit wird derart in Bewegung versetzt, dass kleine Luftblasen eingetragen werden, die sich mit den Partikel zu Partikel-Luftblaseneinheiten verbinden. Das Reduktionsmittel reduziert den Sauerstoff aus den Luftblasen, so dass Stickstoffblasen zurückbleiben. Die Partikel-Stickstoffblasen bewirken die erhöhte Stabilität der ansonsten absinkenden metallischen Partikel in der Flüssigkeit.

Aus US 2.780,585 ist ein Flotationsverfahren bekannt, bei dem zum Beispiel eine Katalysatormischung in Fraktionen mit unterschiedlichem Eisengehalt aufgetrennt wird. Dabei wird die Eigenschaft des Flotationsmittels ausgenutzt, sich selektiv an Eisen anzulagern, welches sich an der Oberfläche der Katalysatorpartikel befindet.

Ferner wird in WO 00/43127 eine Feststoffabtrennungsvorrichtung beschrieben, bei der Feststoffe mit Hilfe der Flotation chemisch und physikalisch aus deiner Suspension entfernt werden. Die Gasblasen werden dabei insbesondere durch Übersättigung erzeugt.

In WO 99/32407 wird ebenfalls ein Flotationsverfahren offenbart, bei dem jedoch die Bildung der zur Flotation notwendigen Gasblasen durch eine katalytische Reaktion einer chemischen Substanz erzeugt werden.

### Aufgabe und Lösung

Aufgabe der Erfindung ist es, ein Verfahren zur Verfügung zu stellen, mit dem aus einer Katalysatormischung mit unterschiedlicher Aktivität und/oder Größe besonders aktive Katalysatorpartikel abgetrennt werden können.

Die Aufgabe der Erfindung wird gelöst durch ein Verfahren mit der Gesamtheit der Merkmale gemäß Hauptanspruch. Vorteilhafte Ausführungsverfahren finden sich in den darauf rückbezogenen Ansprüchen.

### Gegenstand der Erfindung

Die Erfindung löst die Aufgabe, die hochaktiven Katalysatorpartikel aus einer Mischung aus unterschiedlichen Katalysatorpartikeln abzutrennen. Herkömmliche Katalysatormischungen weisen regelmäßig eine gewisse Größenverteilung der Partikel bezüglich ihrer Größe, bzw. ihres Volumens aus. Es ist bekannt, dass die Aktivität, die sich aus der Anzahl der aktiven Zentren pro Oberflächeneinheit eines Katalysatorpartikels ergibt, mit abnehmendem Volumen eines Katalysatorpartikels zunimmt.

Die Erfindung löst die gestellte Aufgabe, in dem sie die zu trennende Katalysatormischung mit unterschiedlich großen und unterschiedlich aktiven Katalysatorpartikeln in eine wässrige Lösung gibt, die ein Gasblasen ausbildendes Agens, wie beispielsweise H₂O₂ enthält. Dort reagieren die aktiven Zentren der Katalysatorpartikel gemäß der nachfolgenden Rektionsformel.

H₂O₂→H₂O+1/2 O₂

Der bei dieser Reaktion an der Katalysatoroberfläche frei werdende Sauerstoff bildet Gasblasen, die zunächst bis zum Erreichen einer bestimmten Größe durch Adhäsionskräfte an der Oberfläche des Katalysatorpartikels anhaften. Dadurch wird das Katalysatorkorn, welches regelmäßig schwerer als Wasser ist und am Boden des Gefäßes verbleibt, durch den durch die anhaftenden Gasblasen erzeugten Auftrieb an die Oberfläche der H₂O₂-haltigen Lösung transportiert.

Dies geschieht jedoch nicht für alle Katalysatorpartikel in identischer Weise. Kleinere Katalysatorpartikel mit einer hohen Anzahl an aktiven Zentren auf ihrer Oberfläche werden durch die größere Anzahl an Gasblasen in Kombination mit ihrem geringeren Gewicht deutlich schneller an die Oberfläche der H₂O₂-haltigen Lösung transportiert, als größere Partikel. Am schnellsten sind die kleinsten Partikel mit einer hohen Anzahl an aktiven Zentren. Dies sind jedoch genau die hochaktiven Katalysatorpartikel, die man aus der Mischung abtrennen will.

Durch schnelles Abschöpfen, beispielsweise durch Dekantation, nach der Mischung des Katalysators mit der H₂O₂-haltigen Lösung, werden so erfindungsgemäß die hochaktiven Katalysatorpartikel aus der Mischung abgetrennt.

Durch anschließendes Waschen und Trocknen wird so auf einfache Weise eine hochaktive Fraktion aus der gesamten Katalysatormischung erhalten.

### Spezieller Beschreibungsteil

Nachfolgend wird der Gegenstand der Erfindung anhand von Ausführungsbeispielen näher erläutert, ohne dass der Gegenstand der Erfindung dadurch beschränkt wird.

Die Konzentration der H₂O₂-Lösung liegt vorteilhaft im Bereich von ca. 0,034 - 3,4 Gew.-%. Das entspricht einer Konzentration von ca. 0,01 - 1 mol/L.

Der Vorgang des Adsorbierens der Gasblasen und des Auftreibens der hochaktiven Katalysatorpartikel spielt sich beispielsweise in Zeiträumen von einer Sekunde bis zu einigen Minuten ab.

Neben der einmaligen Abschöpfung einer hochaktiven Katalysatorfraktion ist es auch möglich, mehrere Fraktionen mit gestaffelter Aktivität abzutrennen. Dazu ist beispielsweise eine Fraktionierung durch Kaskadenfraktionierung denkbar.

### 1. Ausführungbeispiel:

Angegeben sind die Menge an Katalysator und das Volumen der Lösung:
100 ml Standzylinder + 1 g Katalysator + 90 ml Lösung.

Geeignete Konzentrationen an H₂O₂-Lösung liegen im Bereich von 0,01 - 1 mol/L. Das entspricht etwa 0,034 - 3,4 Gew.-%.

Das Dekantieren erfolgt typischerweise innerhalb von wenigen Sekunden bis zu einigen Minuten. Neben einer einmaligen Abtrennung ist auch eine Fraktionierung durch Kaskadenfraktionierung denkbar.

Im Rahmen dieser Erfindung sollen auch einer H₂O₂-Lösung gleichwirkende Lösungen mit umfasst sein, insbesondere Lösungen, in denen Gase physikalisch gelöst sind. Ein geeignetes Beispiel ist CO₂ in H₂O. Ferner ist auch Hydrazin in sauerstoffhaltigem Wasser als geeignete Lösung vorstellbar:

H₂NH₂+O₂→N₂+2H₂O (katalytische Reaktion)

Gemäß der Erfindung werden die Katalysatorpartikel vorteilhaft zunächst mit dem Lösungsmittel verrührt, um anhaftende Luft zu entfernen. Dann stoppt man die Rührung, damit die Katalysatorpartikel zu Boden sinken. Anschließend wird das Agens dazugegeben (Flüssigkeitszugabe oder Aufpressen von Gasen), entweder unter schwacher Rührung oder gar keiner Rührung.

Die Aktivität der so erhaltenen Katalysatorfraktionen wird anschließend in Brennstoffzellen untersucht. Sehr aktive Partikel führen dabei zu einer höheren Strom- bzw. Leistungsdichte der Brennstoffzelle. Auf diese Weise ist ein direkter Vergleich der Aktivitäten möglich.

## Patentansprüche

1. Verfahren zum Abtrennen einer Fraktion von hochaktiven Katalysatorpartikeln aus einer Mischung von unterschiedlich großen und unterschiedlich aktiven Katalysatorpartikeln mit den folgenden Schritten:
- die Katalysatormischung wird in einer wässrigen Lösung mit einem Gasblasen ausbildenden Agens gemischt,
- die Gasblasen adsorbieren zumindest teilweise an den Katalysatorpartikeln,
- in Abhängigkeit von der Zeit wird eine erste Fraktionen der auftreibenden Katalysatorpartikel an der Oberfläche aus der Lösung entfernt.

2. Verfahren nach Anspruch 1, bei dem
- zunächst der Katalysator mit einem Lösungsmittel gemischt wird,
- durch Rühren die an den Partikeln haftenden Luftblasen entfernt werden,
- erst anschließend das Gasblasen ausbildende Agens zugegeben.

3. Verfahren nach einem der Ansprüche 1 bis 2, bei dem eine H₂O₂-haltige Lösung als Gasblasen bildendes Agens eingesetzt wird.

## Claims

1. Method of separating a fraction comprising highly active catalyst particles from a mixture of catalyst particles of different sizes and different activities, having the following steps:
- the catalyst mixture is mixed, in an aqueous solution, with an agent which generates gas bubbles,
- at least some of the gas bubbles are adsorbed on the catalyst particles,
- as a function of time, a first fraction of the catalyst particles which rise buoyantly are removed from the solution at the surface.

2. Method according to claim 1, in which
- the catalyst is first mixed with a solvent,
- the air bubbles clinging to the particles are removed by stirring,
- only then is the agent which generates gas bubbles added.

3. Method according to either of claims 1 and 2, in which a solution containing H₂O₂ is used as the agent which generates gas bubbles.

## Revendications

1. Procédé servant à séparer une fraction de particules de catalyseur hautement radioactives d'un mélange de particules de catalyseur diverses de grande taille et actives comportant les étapes suivantes :
- le mélange du catalyseur est mélangé dans une solution aqueuse présentant un agent chimique réalisant des bulles de gaz,
- les bulles de gaz adsorbent au moins partiellement une partie des particules de catalyseur,
- une première fraction des particules de catalyseur gonflées est séparée à la surface de la solution en fonction de la durée.

2. Procédé selon la revendication 1, dans lequel
- le catalyseur est tout d'abord mélangé à un solvant,
- les bulles d'air collées aux particules sont éliminées par agitation,
- immédiatement après, on ajoute l'agent chimique réalisant des bulles de gaz.

3. Procédé selon l'une quelconque des revendications 1 à 2, dans lequel une solution contenant du H₂O₂ est ajoutée comme agent chimique formant des bulles de gaz.
